# EUROPEAN PATENT SPECIFICATION

(11) **EP 1 169 761 B1**
(45) Date of publication and mention of the grant of the patent: **15.12.2004**
(21) Application number: 00920683.0
(22) Date of filing: 07.04.2000
(51) Int. Cl.: H02B 1/20

(54) **SUPPORTING MODULE FOR ELECTRICAL APPARATUSES**
HALTERUNGSMODULE FÜR ELEKTRISCHE APPARATE
MODULE SUPPORT POUR DISPOSITIFS ELECTRIQUES

(30) Priority: 09.04.1999 IT MI990736
(43) Date of publication of application: 09.01.2002
(73) Proprietor: ABB Service S.r.l, 20124 Milano (IT)
(72) Inventor: CAVALLI, Ruggiero, I-36063 Marostica (IT); PEZZATO, Maurizio, I-36067 San Giuseppe di Cassola (IT)
(74) Representative: Giavarini, Francesco
(86) International application number: PCT/EP2000/003200
(87) International publication number: WO 2000/062387

(56) References cited:
- EP-A- 0 872 922

## Description

The present invention relates to a supporting module for electrical apparatuses in switchboards or the like, having improved functions and characteristics; more particularly, the supporting module according to the invention has a constructive structure which differs with respect to known types of supporting devices in its simplicity, both in terms of production and in practical use, allowing to considerably simplify the assembly steps and to significantly reduce installation times.

It is known that electrical control switchboards, cabinets or similar devices use a plurality of electrical apparatuses, such as for example modular circuit breakers, residual-current blocks et cetera, which are suitable to be connected electrically to a power supply system. In particular, said electrical apparatuses are arranged in one or more mutually parallel rows in which the devices that belong to a same row are arranged mutually side by side and are engaged with known metallic fixing guides which have an appropriate profile; in turn, the fixing guides are connected to a supporting frame which is generally made of plastic.

In the current state of the art, in one of the solutions adopted for producing electrical switchboard the frame for supporting the electrical apparatuses is an integral part of the base of the control panel; this makes it necessary to assemble the control panel directly at the installation site, with the base fixed beforehand to a further supporting element, typically a wall.

This solution is clearly unsatisfactory, since it forces operators to work in awkward conditions and accordingly entails an increase in the difficulty and time requirements of assembly, especially in case of electrical apparatuses arranged on multiple guides.

One solution adopted in the art in order to obviate these drawbacks uses a monolithic supporting frame which is separate from the base of the switchboard. In this manner it is possible to fit the electrical apparatuses on the fixing guides and to provide at least part of the necessary wiring directly on a workbench; the guides are then fixed to the supporting frame by virtue of fixing means, for example self-tapping screws. The resulting preassembled structure is then applied to the base of the switchboard as a single independent body by fixing the frame on said base.

Although this solution provides some improvements with respect to the solution in which the frame is integrated in the base of the switchboard, it is not entirely satisfactory, both as regards the steps for assembling and installing the control panel and as regards the production aspects of said supporting frame.

In practical cases in which it is necessary to use electrical apparatuses arranged on two or more parallel rows, the center distance between two adjacent guides is in fact constant and is preset by the currently applicable standards; accordingly, since the frame is a monolithic body and must have preset dimensions, it is necessary to have frames having mutually different dimensions according to the number of guides to be used. This accordingly entails a lack of application flexibility and the consequent need to adopt several moulds of various sizes, with a significant increase in production costs.

Furthermore, although this solution allows to assemble the components of the switchboard directly on a workbench, once the guides have been fixed to the frame the spaces that remain between rows of devices are considerably narrow; accordingly, the insertion of the elements for electrical connection among the various devices, such as for example cables, connection bridges et cetera, is extremely complicated.

The fact should also be stressed that since the connections between the guides and the frame and between the frame and the base of the switchboard are provided by virtue of fixing means such as self-tapping screws, additional manual operations and the use of additional construction components become necessary.

The aim of the present invention is to provide a supporting module for electrical apparatuses in electrical switchboards or the like, which is extremely flexible in application, allowing to provide various application configurations without requiring dimensional and/or structural modifications to its constructive elements.

Within the scope of this aim, an object of the present invention is to provide a supporting module for electrical apparatuses in electrical switchboards or the like, which allows to reduce, with respect to known types of support, the number of moulds required to produce its components, thus allowing to reduce production costs and to provide advantageous economies of scale.

Another object of the present invention is to provide a supporting module for electrical apparatuses in electrical switchboards or the like, which allows to considerably simplify the steps for mutually assembling the various components and to facilitate the connections between the various devices, thus reducing assembly times, regardless of the configuration to be provided.

Another object of the present invention is to provide a supporting module for electrical apparatuses in electrical switchboards or the like, which is highly reliable, relatively easy to provide and at competitive costs.

This aim, these objects and others which will become apparent hereinafter are achieved by a supporting module for electrical apparatuses in electrical switchboards, comprising an insulating body and a fixing guide for fixing said electrical apparatuses which are supplied by at least one power supply bar, characterized in that said insulating body is substantially shaped like a parallelepiped and has a first wall, from which means for direct engagement with the fixing guide protrude, and a second wall, which is substantially perpendicular to the first wall, from which means for connection to said power supply bar protrude.

The supporting module according to the invention therefore has the advantage of integrating, in a single element, the means for direct engagement to the fixing guide and the means for connection to the power supply bar; this reduces the components to be used and simplifies the assembly operations.

Further characteristics and advantages of the invention will become apparent from the description of preferred but not exclusive embodiments of the supporting module according to the invention, illustrated only by way of non-limitative example in the accompanying drawings, wherein:
Figures 1 and 9 are schematic perspective views of a set of electrical apparatuses arranged on a fixing guide during electrical connection to a power supply bar;
Figure 2 is a sectional side view of a modular circuit breaker which is arranged on a fixing guide and is electrically connected to a power supply bar;
Figures 3 and 4 are perspective views of an insulating body used in the supporting module according to the invention;
Figures 5 and 6 are perspective views of a spacer module which can be used to provide a modular device for supporting electrical apparatuses in control switchboards and the like;
Figure 7 is a sectional side view of the coupling between an insulating body and a spacer module;
Figure 8 is a schematic perspective view of a possible embodiment of a modular device for supporting electrical apparatuses in control switchboards and the like.

In the following description, identical reference numerals designate technically equivalent elements; further, the word switchboards includes control panels, electrical cabinets, electrical boxes and other similar and equivalent devices.

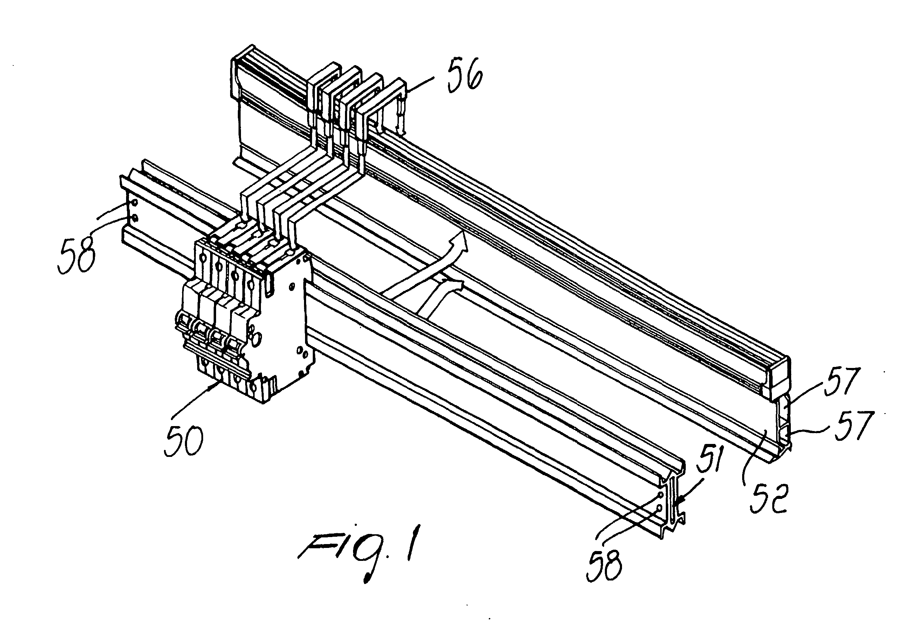

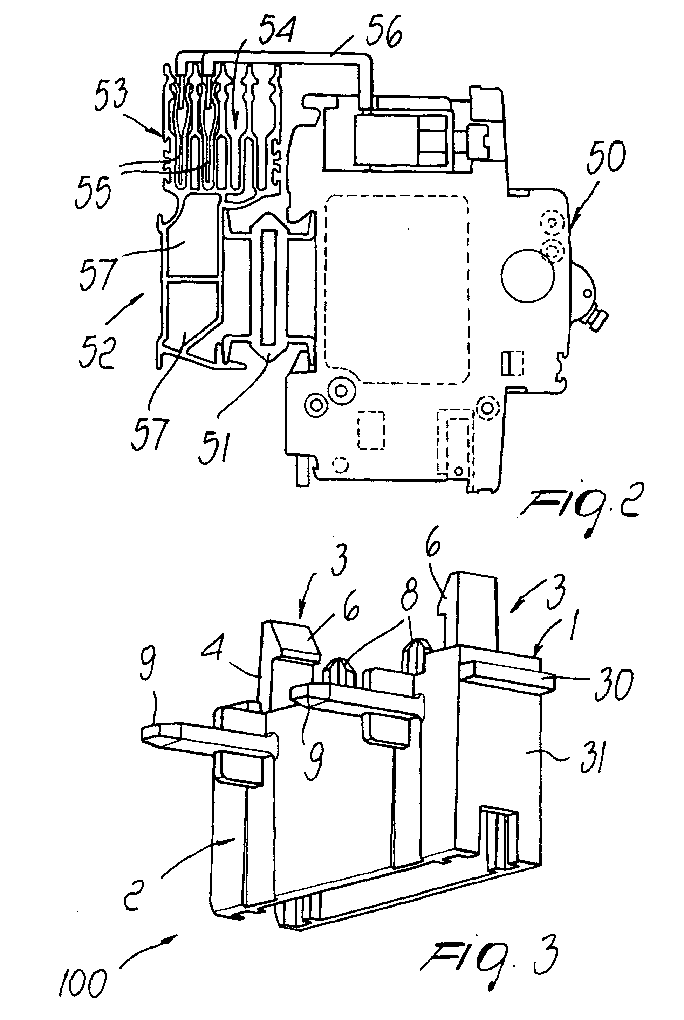

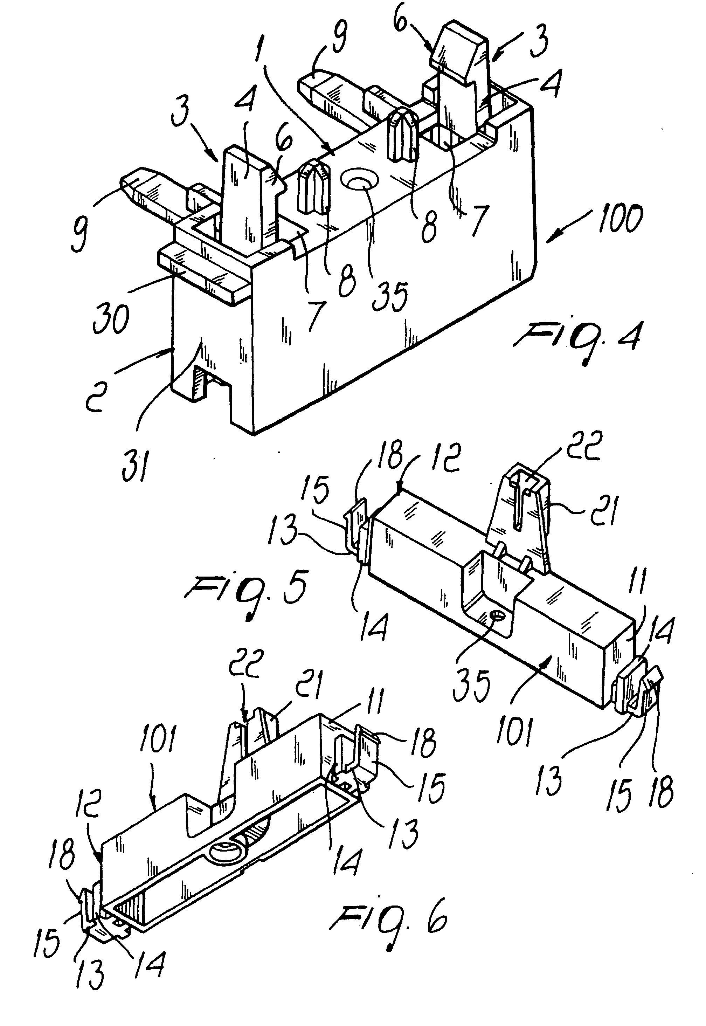

The supporting module according to the invention comprises a first insulating body 100, illustrated in detail in Figures 3 and 4, and a fixing guide on which electrical apparatuses of an electrical switchboard can be fixed; said electrical apparatuses, such as for example modular circuit breakers, residual-current blocks et cetera, are supplied with power by at least one power supply bar; in particular, Figures 1, 9 and 2 show a few electrical apparatuses, designated by the reference numeral 50, which are arranged on a fixing guide 51. In the embodiment shown in Figure 9, the fixing guide 51 is a guide whose profile is shaped according to the CENELEC-EN 50022 standard; as an alternative, and as shown for example in Figures 1 and 2, it is possible to use guides having a double cross-section, known in the art as DIN guides, or even guides having a different profile, so long as it is compatible with the requirements of the application. In turn, the fixing guide 51 is connected to a power supply bar 52; in particular, the power supply bar 52 comprises an insulating portion 53 which is shaped so as to have appropriate seats 54 in which conducting elements 55 are arranged. The electrical connection between the electrical apparatuses 50 and the conducting elements 55 is provided by virtue of appropriate conducting means 56; in the illustrated embodiment, said conducting means are constituted by U-shaped bridges 56.

An example of embodiment of the power supply bar 52, of the conducting means 56 and of the corresponding connections is the subject of European patent no. EP0872922.

Advantageously, the insulating body 100 used in the supporting module according to the invention comprises a body which is shaped substantially like a parallelepiped, and has a first wall 1, from which means for directly engaging the fixing guide 51 protrude, and a second wall 2, which is substantially perpendicular to the first wall 1 and from which means for connection to the power supply bar 52 protrude.

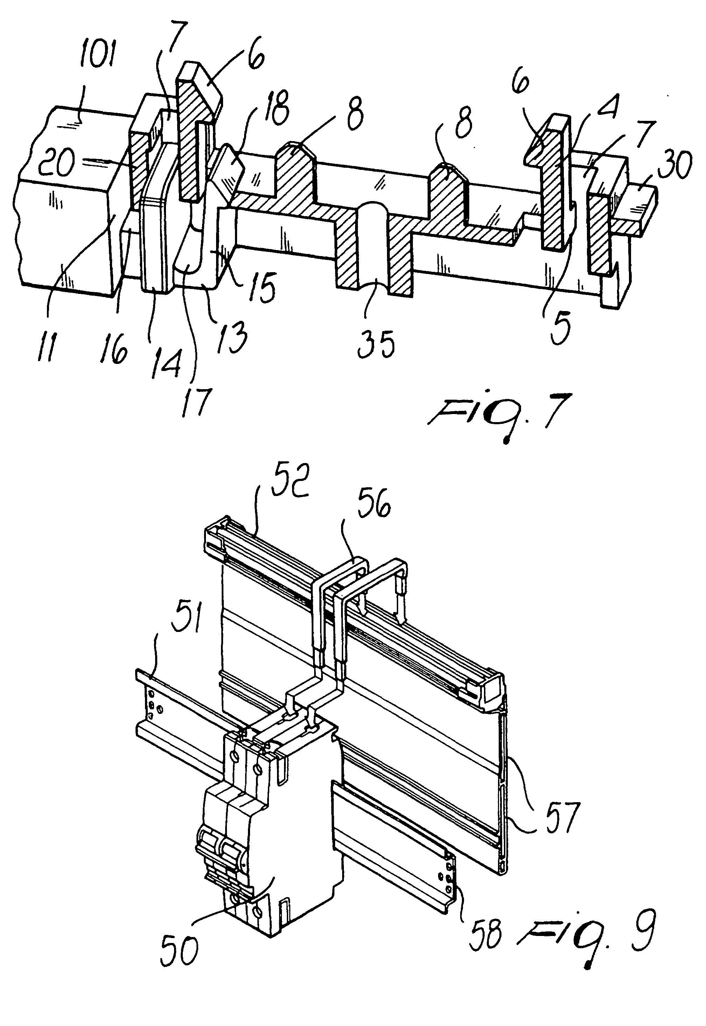

The means for directly engaging the fixing guide comprise, at two opposite ends of the first wall 1, two shaped bodies 3, each of which is partially accommodated in suitable through channels 7 formed in the parallelepipedal body 100. In particular, as shown in detail in Figure 7, each shaped body 3 has a first element 4, which lies inside the channel 7 and passes through the first wall 1, and a second element 5, in which a first end protrudes from an internal surface of the through channel 7 and a second end is connected to the first element 4, so that the two elements 4 and 5 are substantially perpendicular to each other. In turn, the free end of the first element 4, which lies opposite the end connected to the second element 5, is advantageously provided with means 6 for coupling to the fixing guide 51. In particular, as shown in greater detail in Figure 3, the shaped body 3 has a substantially L-shaped structure in which the means for coupling to the fixing guide 51 are constituted, for example, by a beak-shaped protrusion 6; on the wall 1, and in an intermediate position between the two shaped bodies 3, there are also two pins 8 which are suitable to geometrically mate with corresponding holes formed in the fixing guide.

The means for connection to the power supply bar 52 comprise two prongs 9 which cantilever out from the second wall 2 of the body 100 and are suitable to be inserted directly at corresponding seats 57 formed in said power supply bar; as an alternative, and according to the application requirements, it might be possible to use a single prong or three or even more prongs.

With this solution, during the assembly of a switchboard, two insulating bodies 100 are arranged at the opposite ends of the fixing guide 51, so that the prongs 9 are inserted in the seats 57 of the power supply bar 52; the fixing guide 51 is then connected to the bodies 100, so that the beak-shaped protrusions 6 of the shaped bodies 3 couple to the contoured walls of said guide 51. In particular, by virtue of the constructive structure of each shaped body 3 the coupling between the guide and the insulating bodies occurs with a snap action with is very simple and at the same time very effective. Furthermore, the pins 8, by entering corresponding holes 58 formed in the fixing guide 51, facilitate the connection between the fixing guide and the bodies 100, contributing to bear and distribute the structural weight of the electrical apparatuses arranged on said guide.

In this manner one has a single element which can be connected directly to the fixing guide and to the power supply bar, according to a solution which is advantageous as regards the production aspect and as regards the assembly steps.

Furthermore, the supporting module according to the invention, by virtue of the shape and modularity of its constructive structure, can be easily used and without requiring modifications to produce modular devices for supporting electrical apparatuses in switchboards, cabinets or the like in which the apparatuses are arranged on two or more fixing guides. In detail, a modular devices for supporting electrical apparatuses in electrical switchboards, with the electrical apparatuses arranged on first and second fixing guides 51 and supplied with power by two corresponding power supply bars 52 comprises:
-- a first and a second supporting modules, whose shape and functionality are as described above (clearly two insulating bodies 100 are arranged respectively at two ends of the first and second fixing guides 51);
-- two spacer modules, each of which has a substantially parallelepipedal body 101 made of insulating material which has, on two mutually parallel walls 11 and 12, connection means which allow connection to two insulating bodies, namely a first insulating body which belongs to the first supporting module and a second insulating body which belongs to the second supporting module.

As shown in detail in Figures 5 and 6, the connection means that belong to the spacer modules comprise a shaped arm 13 which protrudes from the walls 11 and 12 of the parallelepipedal body 101; the shaped arm 13 has, in an intermediate position and, respectively, in an end position, a first tooth 14 and a second tooth 15 which are substantially parallel to each other and to the walls 11 and 12 respectively. In this manner, two corresponding seats 16 and 17 are formed between the walls 11 and 12 of the parallelepipedal body 101 and the first tooth 14 and between the first tooth 14 and the second tooth 15. Furthermore, each second tooth 15 has, on the opposite side with respect to the first tooth 14, a beak-shaped end 18. As shown in Figures 5 and 6, the spacer modules furthermore have a protruding block 21 on the surface of which there is a seat 22 which is suitable to facilitate push-fit coupling with a cable terminal, not shown.

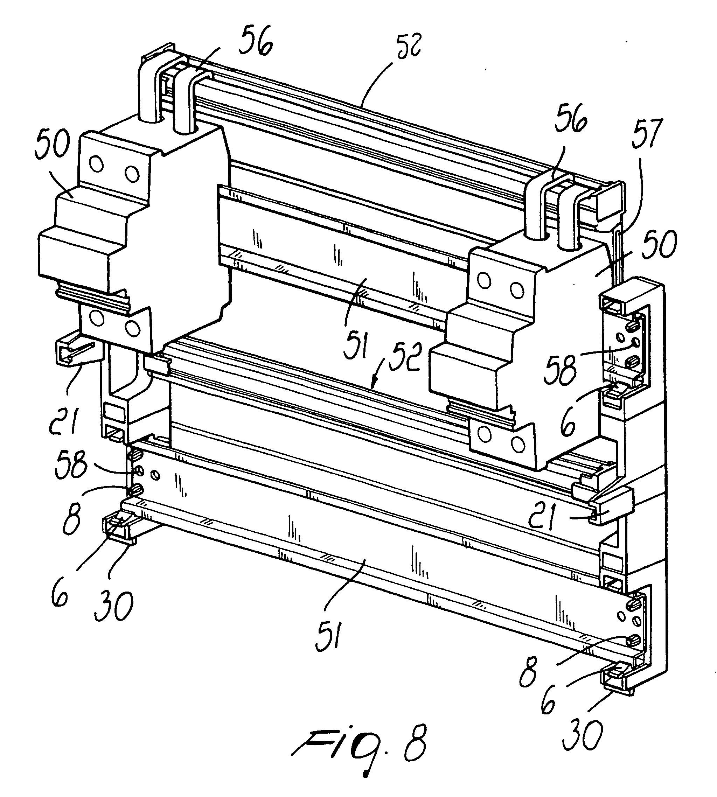

If, as shown for example in Figure 8, it is necessary to provide a switchboard in which the electrical apparatuses 50 are arranged on two fixing guides 51 and are supplied with power by two corresponding power supply bars 52, the four insulating bodies can be advantageously mutually coupled in pairs by interposing a spacer module; for the sake of clarity in illustration, Figure 8 shows only two electrical apparatuses 50 arranged on a first fixing guide 51.

In particular, each spacer module is connected to two insulating bodies 100 by inserting in a through channel 7 of each of them the first tooth 14 and the second tooth 15; the teeth 14 and 15 are arranged so that the seats 16 and 17 couple geometrically, respectively, to a wall 20 of the through channel 7 and to a portion of a shaped body 3, as shown in detail in Figure 7. Furthermore, the tooth 15 is sized so that its beak-shaped end 18 abuts against the outer surface of the wall 1.

In this manner, with an extremely simple and rapid operation one obtains a supporting module which constitutes a frame which is structurally rigid and inherently reliable; furthermore, said supporting module allows to perform practically all the operations for assembling the various electrical parts of the switchboard directly on a workbench, subsequently connecting in the previously described manner the fixing guides to the insulating bodies. In turn, the modular device can be then mounted directly onto a further supporting element, typically the base of the switchboard, as if the entire resulting assembly (apparatuses, fixing guides, power supply bars, connections, et cetera) were a single independent body. This clearly implies a considerable advantage in terms of assembly and installation times and costs.

An important advantage of the modular device thus obtained consists on the fact that by virtue of the modularity, simplicity and effectiveness of its structure it can be used to provide switchboards or the like in which it is necessary to use three or more fixing guides. In such cases it is in fact sufficient of use, for each additional fixing guide, an additional pair of insulating bodies and an additional pair of spacer modules, providing the connections in the same manner described above and thus avoiding, differently from what occurs in the devices of the known art, the use of moulds of various sizes and mutually different product lines according to the specific production requirements.

This clearly allows to provide advantageous economies of scale, considerably simplifying the production steps and reducing the number of product codes to be kept in stock.

Another considerable advantage is the fact that it is possible to associate with the supporting module according to the invention means for direct coupling and fixing to a supporting element, typically the base of a switchboard. In particular, in the embodiment shown in the accompanying figures, the coupling and fixing means comprise a raised portion 30 which is shaped substantially like a parallelepiped, is formed on a third wall 31 of the body 100 which is perpendicular to the first wall 1 and to the second wall 2, and is suitable to mate geometrically with a corresponding shaped wall which is formed on said supporting base and is not shown.

The presence of the raised portion 30 is particularly advantageous in the use of the above described modular device. In this case, as shown for example in Figure 8, it is in fact sufficient to have just two insulating bodies provided with the raised portion 30 and connected to the opposite ends of a same fixing guide 51. The modular device can be connected to the supporting base of the switchboard, arranging it so that the raised portion 30 of each insulating body abuts against a corresponding shaped protrusion which is formed on said base and is not shown; for example, said shaped protrusion may have a shape which is similar to the beak-shaped protrusion 6 formed on the insulating body 100 itself.

The second pair of bodies not provided with a raised portion 30 and fixed to the second fixing guide 51 then interacts with a smooth shoulder wall formed on said supporting base. In this manner, therefore, the connection of the assembly constituted by the insulating bodies, the spacer modules, electrical apparatuses 50, the fixing guides 51, the power supply bars 52 et cetera to the supporting base occurs with a single operation which is simple and rapid and requires no additional constructive components, such as fixing screws et cetera.

As shown in Figures 3-6, if there are particular application requirements it is in any case possible to form a hole 35 in the insulating bodies and in the spacer modules in order to accommodate screws for fixing to said supporting base.

In practice, it has been found that the supporting module according to the invention fully achieves the intended aim and objects; it should also be noted that all the innovative functions and the inventive aspects of the invention can be obtained by using elements and materials which are commonly commercially available at extremely low costs. In particular, each of the insulating bodies and of the spacer modules can be provided as a single part made of thermoplastic material, for example polycarbonate. This material in fact allows to give the modules the necessary structural rigidity, associated with elasticity of the parts, such as for example the shaped bodies 3, for which elasticity properties are fundamental in order to perform the functions for which they have been conceived.

The supporting module thus conceived is susceptible of numerous modifications and variations, all of which are within the scope of the inventive concept; all the details may furthermore be replaced with other technically equivalent elements.

In practice, the materials used, as well as the dimensions, may be any according to the requirements and the state of the art.

## Claims

1. A supporting module for electrical apparatuses in electrical switchboards, comprising an insulating body and a fixing guide for fixing said electrical apparatuses which are supplied by at least one power supply bar, **characterized in that** said insulating body is substantially shaped like a parallelepiped and has a first wall, from which means for direct engagement with the fixing guide protrude, and a second wall, which is substantially perpendicular to the first wall, from which means for connection to said power supply bar protrude.

2. The supporting module according to claim 1, **characterized in that** said means for direct engagement to the fixing guide comprise, at two opposite ends of said first wall, two shaped bodies, each of which has a first element which passes through said first wall, and a second element, which is connected to an end of, and is substantially perpendicular to, said first element, the opposite end of said first element being provided with means for coupling to the fixing guide.

3. The supporting module according to claim 2, **characterized in that** it has, at each one of said two shaped bodies, a through channel, one end of said second element being fixed to an internal surface thereof, said through channel furthermore accommodating a portion of said first element.

4. The supporting module according to claim 2, **characterized in that** said substantially parallelepipedal body has, on said first wall and in an intermediate position between the two shaped bodies, two pins which are suitable to couple geometrically with corresponding holes formed in the fixing guide.

5. The supporting module according to claim 1, **characterized in that** said means for connection to the power supply bar comprise two prongs which cantilever out from said second wall and are suitable to be inserted in corresponding seats formed in said power supply bar.

6. A modular device for supporting electrical apparatuses in electrical switchboards, **characterized in that** it comprises:
-- a first and a second supporting modules according to one or more of claims 1 to 5;
-- two spacer modules, each of which has an insulating body which is shaped substantially like a parallelepiped and has, on two substantially parallel walls, connection means which allow connection to two insulating bodies, of which, a first insulating body belonging to said first supporting module and a second insulating body belonging to said second supporting module.

7. The modular device according to claim 6, **characterized in that** said connection means comprise a shaped arm which protrudes from a wall of said parallelepipedal body, a first tooth and a second tooth being formed on said shaped arm in an intermediate position and in an end position, respectively, said teeth being substantially parallel to each other and to the wall from which said arm protrudes.

8. The modular device according to claim 7, **characterized in that** two seats are formed between said wall of the parallelepipedal body from which the shaped arm protrudes and said first tooth, and between the first tooth and said second tooth, said seats being suitable to couple, respectively, to a wall of said through channels and to a portion of said shaped body.

9. The modular device according to claim 7 or 8, **characterized in that** said second tooth has, on the opposite side with respect to the first tooth, a beak-shaped end which is suitable to abut against said first wall of an insulating body.

10. The modular device according to one or more of claims 7 to 9, **characterized in that** said spacer modules have a protruding block on the surface of which there is a seat which is suitable to facilitate push-fit coupling with a cable terminal.

11. The modular device according to claim 6, **characterized in that** the insulating body of said first supporting module has, on a third wall which is perpendicular to said first and second walls, means for direct coupling and fixing to a supporting base.

12. The modular device according to claim 11, **characterized in that** said coupling and fixing means comprise a raised portion which is substantially shaped like a parallelepiped and is suitable to couple geometrically to a corresponding shaped wall formed on said supporting base.

13. The modular device according to one or more of claims 6 to 12, **characterized in that** said insulating bodies and said spacer modules are formed monolithically and are made of thermoplastic material.

## Patentansprüche

1. Stützmodul für elektrische Geräte in elektrischen Schaltschränken umfassend einen isolierenden Körper und eine Befestigungsführung zur Befestigung dieser elektrischen Geräte, welche durch wenigstens eine Stromversorgungsschiene versorgt werden, **gekennzeichnet dadurch, dass** der isolierende Körper im Wesentlichen wie ein Prallelepiped geformt ist und eine erste Wand aufweist, von welcher Mittel zum direkten Einrasten in die Befestigungsführung vorspringen, und eine zweite Wand, welche im Wesentlichen senkrecht auf die erste Wand ist, von welcher Mittel zur Verbindung mit der Stromversorgungsschiene vorspringen.

2. Stützmodul nach Anspruch 1, **gekennzeichnet dadurch, dass** die Mittel zum direkten Einrasten in die Befestigungsführung an zwei gegenüberliegenden Wänden der ersten Wand zwei geformte Körper aufweisen, von denen jeder ein erstes Element hat, welches durch die erste Wand durchtritt und ein zweites Element, welches mit einem Ende von dem ersten Element verbunden ist und im Wesentlichen senkrecht auf das gegenüberliegende Ende des ersten Elementes ist, welches mit Mitteln zur Kopplung an die Befestigungsführung ausgestattet ist.

3. Das Stützmodul nach Anspruch 2, **gekennzeichnet dadurch, dass** es an jedem der zwei geformten Körper einen Durchlasskanal aufweist, wobei ein Ende des zweiten Elementes an einer inneren Oberfläche davon befestigt ist, wobei der Durchlasskanal ferner einen Abschnitt des ersten Elementes aufnimmt.

4. Das Stützmodul nach Anspruch 2, **gekennzeichnet dadurch, dass** der im Wesentlichen parallelepipedisch geformte Körper auf der ersten Wand und in einer zwischenliegenden Position zwischen den zwei geformten Körpern zwei Stifte aufweist, welche geeignet sind, geometrisch mit zwei entsprechenden Löchern die auf der Befestigungsführung gebildet werden, zu koppeln.

5. Das Stützmodul nach Anspruch 1, **gekennzeichnet dadurch, dass** die Mittel zur Verbindung der Stromversorgungsschiene zwei Zacken umfassen, welche aus der zweiten Wand auskragen und die geeignet sind in entsprechende Sitze, die auf der Stromversorgungsschiene gebildet werden, eingefügt zu werden.

6. Eine modulare Vorrichtung zur Stützung elektrischer Geräte in elektrischen Schaltschränken, **gekennzeichnet dadurch, dass** sie umfasst:
- ein erstes und ein zweites Stützmodul gemäß einem oder mehreren der Ansprüche 1 bis 5;
- zwei Abstandsmodule, von denen jedes einen isolierenden Körper aufweist, welcher im Wesentlichen wie ein Parallelepiped geformt ist und auf zwei im Wesentlichen parallelen Wänden Verbindungsmittel hat, welche die Verbindung an zwei isolierende Körper erlauben, von denen ein erster isolierender Körper zum ersten Stützmodul gehört und ein zweiter isolierender Körper zum zweiten Stützmodul gehört.

7. Die modulare Vorrichtung nach Anspruch 6, **gekennzeichnet dadurch, dass** die Verbindungsmittel einen geformten Arm aufweisen, welcher von einer Wand des parallelepipedischen Körpers vorspringt, einen ersten Zahn und einen zweiten Zahn, der auf dem Arm geformt ist, jeweils in einer zwischenliegenden Lage und in einer Endlage, wobei die Zähne im Wesentlichen parallel zueinander sind und zu der Wand, von welcher der Arm vorspringt.

8. Die modulare Vorrichtung nach Anspruch 7, **gekennzeichnet dadurch, dass** zwei Sitze zwischen der Wand des parallelepipedischen Körpers ausgebildet werden, von welcher der geformte Arm vorspringt und der erste Zahn, und zwischen dem ersten Zahn und dem zweiten Zahn die Sitze geeignet sind jeweils mit einer Wand dieser Durchlasskanäle und mit einem Abschnitt des geformten Körpers zu koppeln.

9. Die modulare Vorrichtung nach Anspruch 7 oder 8, **gekennzeichnet dadurch, dass** der zweite Zahn auf der gegenüberliegenden Seite in Bezug auf den ersten Zahn ein schnabelförmiges Ende hat, welches geeignet ist, an die erste Wand eines isolierenden Körpers anzugrenzen.

10. Die modulare Vorrichtung nach einen oder mehreren der Ansprüche 7 bis 9, **gekennzeichnet dadurch, dass** die Abstandsmodule einen vorspringenden Block haben, auf dessen Oberfläche es einen Sitz gibt, welcher geeignet ist die Drückpassungskopplung mit einem Kabelanschluss zu erleichtern.

11. Die modulare Vorrichtung nach Anspruch 6, **gekennzeichnet dadurch, dass** der isolierende Körper des ersten Stützmoduls auf einer dritten Wand, welche senkrecht zur ersten und zweiten Wand ist, Mittel zur direkten Kopplung und Befestigung an einer Stützbasis hat.

12. Die modulare Vorrichtung nach Anspruch 11, **gekennzeichnet dadurch, dass** die Kopplungs- und Befestigungsmittel einen erhabenen Abschnitt umfassen, welcher im Wesentlichen wie ein Parallelepiped geformt ist und geeignet ist geometrisch an eine entsprechend geformte Wand zu koppeln, die auf der Stützbasis gebildet wird.

13. Die modulare Vorrichtung gemäß einem oder mehreren von Ansprüchen 6 bis 12, **gekennzeichnet dadurch, dass** die isolierenden Körper und die Abstandsmodule monolithisch gebildet und aus thermoplastischem Material hergestellt sind.

## Revendications

1. Un module de support pour des appareils électriques dans des tableaux électriques, comprenant un corps isolant et un guide de fixation, pour fixer lesdits appareils électriques qui sont alimentés par au moins une barre d'alimentation électrique, **caractérisé en ce que** ledit corps isolant a sensiblement la forme d'un parallélépipède, et comporte une première paroi, depuis laquelle font saillie des moyens d'engagement direct avec le guide de fixation, et une deuxième paroi, qui est sensiblement perpendiculaire à la première paroi, depuis laquelle font saillie des moyens de liaison à ladite barre d'alimentation électrique.

2. Le module de support selon la revendication 1, **caractérisé en ce que** lesdits moyens d'engagement direct avec le guide de fixation comprennent, à deux extrémités opposées de ladite première paroi, deux corps conformés, l'un d'entre eux ayant un premier élément qui passe à travers ladite première paroi, et un second élément qui est relié à l'une de ses extrémités et est sensiblement perpendiculaire audit premier élément, l'extrémité opposée dudit premier élément étant muni de moyens de couplage au guide de fixation.

3. Le module de support selon la revendication 2, **caractérisé en ce qu'**il comporte, à chacun desdits deux corps conformés, un canal débouchant, une extrémité dudit second élément étant fixée à une surface interne de celui-ci, ledit canal débouchant logeant en outre une partie dudit premier élément.

4. Le module de support selon la revendication 2, **caractérisé en ce que** ledit corps sensiblement parallélépipédique comporte, sur ladite première paroi et dans une position intermédiaire entre les deux corps conformés, deux tiges qui sont appropriées pour s'accoupler géométriquement avec des trous correspondants formés dans le guide de fixation.

5. Le module de support selon la revendication 1, **caractérisé en ce que** les moyens de liaison à la barre d'alimentation électrique comprennent deux broches qui sont en porte-à-faux depuis ladite deuxième paroi et sont appropriées pour être insérées dans des sièges correspondants formés dans ladite barre d'alimentation électrique.

6. Dispositif modulaire pour supporter des appareils électriques dans des tableaux électriques, **caractérisé en ce qu'**il comprend :
un premier et un second module de support selon une ou plusieurs des revendications 1 à 5 ;
deux modules d'espacement, chacun d'entre eux ayant un corps isolant qui a sensiblement la forme d'un parallélépipède et comporte, sur deux parois sensiblement parallèles, des moyens de liaison qui permettent la liaison à deux corps isolants, parmi lesquels un premier corps isolant appartient audit premier module de support, et un second corps isolant appartient audit second module de support.

7. Le dispositif modulaire selon la revendication 6, **caractérisé en ce que** lesdits moyens de liaison comprennent un bras conformé qui fait saillie depuis une paroi dudit corps parallélépipédique, une première dent et une seconde dent étant formées sur ledit bras conformé dans une position intermédiaire et dans une position finale respectivement, lesdites dents étant sensiblement parallèles l'une à l'autre et à la paroi depuis laquelle ledit bras fait saillie.

8. Le dispositif modulaire selon la revendication 7, **caractérisé en ce que** deux sièges sont formés entre ladite paroi du corps parallélépipédique, depuis laquelle le bras conformé fait saillie, et ladite première dent, et entre la première dent et ladite seconde dent, lesdits sièges étant appropriés pour être couplés, respectivement à une paroi desdits canaux débouchants et à une partie dudit corps conformé.

9. Le dispositif modulaire selon la revendication 7 ou 8, **caractérisé en ce que** ladite seconde dent a, sur le côté opposé par rapport à la première dent, une extrémité en forme de bec qui est appropriée pour venir en butée contre ladite première paroi d'un corps isolant.

10. Le dispositif modulaire selon une ou plusieurs des revendications 7 à 9, **caractérisé en ce que** lesdits modules d'espacement comportent un bloc faisant saillie, sur la surface duquel se trouve un siège qui est approprié pour faciliter le couplage ajusté avec une cosse de câble.

11. Le dispositif modulaire selon la revendication 6, **caractérisé en ce que** le corps isolant dudit premier module de support comporte, sur une troisième paroi qui est perpendiculaire auxdites première et deuxième parois, des moyens de couplage et de fixation directs sur une base de support.

12. Le dispositif modulaire selon la revendication 11, **caractérisé en ce que** lesdits moyens de couplage et de fixation comprennent une partie surélevée qui a sensiblement la forme d'un parallélépipède, et est appropriée pour s'accoupler géométriquement avec une paroi conformée correspondante, formée sur ladite base de support.

13. Le dispositif modulaire selon une ou plusieurs des revendications 6 à 12, **caractérisé en ce que** lesdits corps isolants et lesdits modules d'espacement sont formés de manière monolithique et sont faits d'un matériau thermoplastique.
